# EUROPEAN PATENT APPLICATION

(11) **EP 0 553 035 A2**
(43) Date of publication of application: **28.07.1993**
(21) Application number: 93400160.3
(22) Date of filing: 22.01.1993
(51) Int. Cl.: G11B 23/03, G11B 23/00, G11B 17/03

(54) **Disc cartridge and disc drive apparatus**

(30) Priority: 24.01.1992 JP 34299/92
(71) Applicant: SONY CORPORATION, Tokyo 141 (JP)
(72) Inventor: Fujisawa, Hirotoshi, c/o SONY CORPORATION, Shinagawa-ku, Tokyo (JP)
(74) Representative: Thévenet, Jean-Bruno

(57) **Abstract**

The disc cartridge (1) includes a cartridge main body (2) and a leaf spring (70). The disc cartridge main body has an opening (8) formed at the bottom portion for inserting a disc rotating apparatus (10) of the disc drive apparatus and accommodates an optical disc (3) mounted on a magnetic plate (5) at the center position. The leaf spring is provided on inner surface of the cartridge main body and pushes the central portion of the magnetic plate thereby depressing the optical disc so that the optical disc closes up the opening of the cartridge main body. The disc drive apparatus includes a drive motor (11), a turntable (13) and an axial projection (16). The turntable is placed on the optical disc and is mounted on a rotating shaft (12) of the drive motor. The axial projection (16) penetrates through an aperture of the magnetic plate and pushes the leaf spring (70) up when the optical disc is placed on the turntable. The axial projection is provided coaxially on the rotating shaft (12).

## Description

### BACKGROUND

### 1. Field of the Invention

This invention relates to a disc cartridge for accommodating an optical disc or the like and a disc drive apparatus for rotating the optical disc within the disc cartridge.

### 2. Background of the Invention

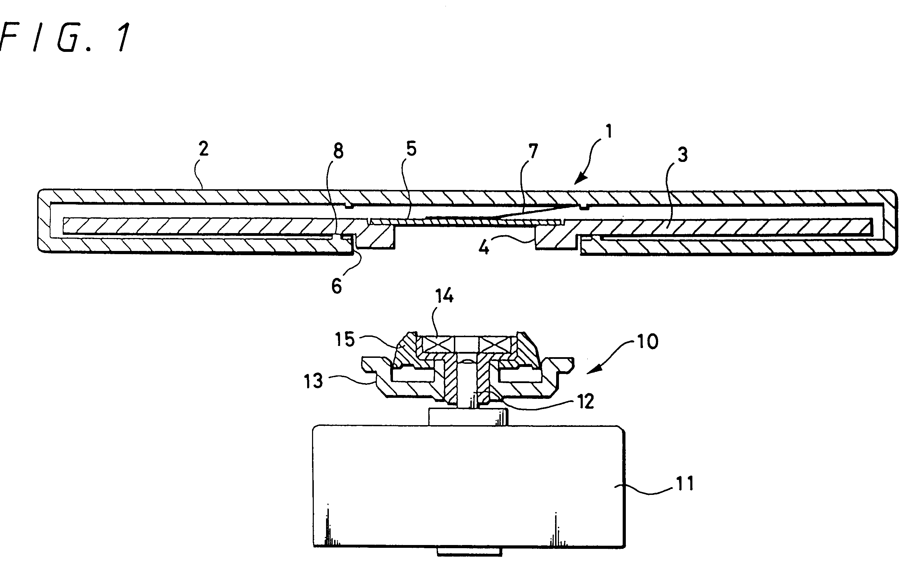

An optical disc recording and/or reproducing system which use a small size optical disc as a recording medium is proposed. The small size optical disc is accommodated in a disc cartridge and is loaded in a recording and/or reproducing apparatus. Referring to FIGURES 1 to 3, the recording and/or reproducing system will be explained. As shown in FIGURES 1 to 3, there shown a disc cartridge 1, a cartridge main body 2 and an optical disc 3, for example, a magneto-optical disc or the like rotatably housed within this cartridge main body 2. The cartridge main body 2 is which is includes a pair of halves abutted and connected to each other. The cartridge main body 2 has an opening 6 formed in the bottom so that a turntable of a disc drive apparatus can be inserted in the opening as will be described later and at least on recording and/or reproducing aperture. Data is recorded on the optical disc 3 or reproduced from the optical disc 3 through the recording and/or reproducing aperture of the cartridge main body 2 by at least one head of the recording and/or reproducing apparatus. The optical disc 3 has a transparent substrate, a recording medium formed on one surface of the substrate, a protective layer formed on the recording medium and a magnetic plate 5 for magnetic clamp. A center hole 4 is formed at the center position of the optical disc 3. The magnetic plate 5 is provided on the protective layer and to cover the center hole 4 from above. The center hole 4 and the magnetic plate 5 of the optical disc 3 are always exposed through the opening 6 of the cartridge main body 2.

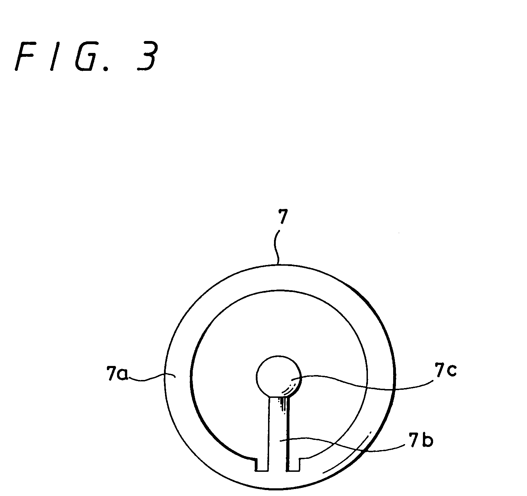

In addition, a leaf spring 7 is mounted on the inner surface of the cartridge main body 2 so as to oppose the upper surface of the magnetic plate 5 of the disc 3. This leaf spring 7, as shown in FIGURE 3, is formed of a ring-shaped base 7a, and an arm 7b projected from the base 7a to the center of the leaf spring 7. The base 7a is securely attached to the inner surface of the cartridge main body 2. The arm 7b has a push end 7c provided at the free end of the arm so that the push end 7c can be made in pressed contact with the center of the magnetic plate 5. As a result, the optical disc 3 is pressed against a rib 8 that is formed along the wall of the opening 6 on the inner side of the cartridge main body 2 by the push of the leaf spring 7. The opening 6 is therefore covered by the optical disc 3 so that dust can be prevented from straying through the opening into the cartridge main body 2 when the disc cartridge 1 is not used or preserved.

Shown at 10 is a disc drive apparatus for rotating the optical disc 3 within the disc cartridge 1. The disc drive apparatus 10 includes a drive motor 11, a turntable 13, a magnet 14 and a tapered cap 15. The turntable 13 is mounted on a rotating shaft 12 of the motor 11. The magnet 14 for clamping the optical disc 3 and the tapered cap 15 are arranged in the recess of the turntable 13.The magnet 14 attracts the magnetic plate 5 of the optical disc 3.The tapered cap 15 is provided coaxial with the turntable 13 so as to rotate together. The tapered centering cap 14 guides the optical disc 3 when the optical disc 3 is placed on the turntable 13.

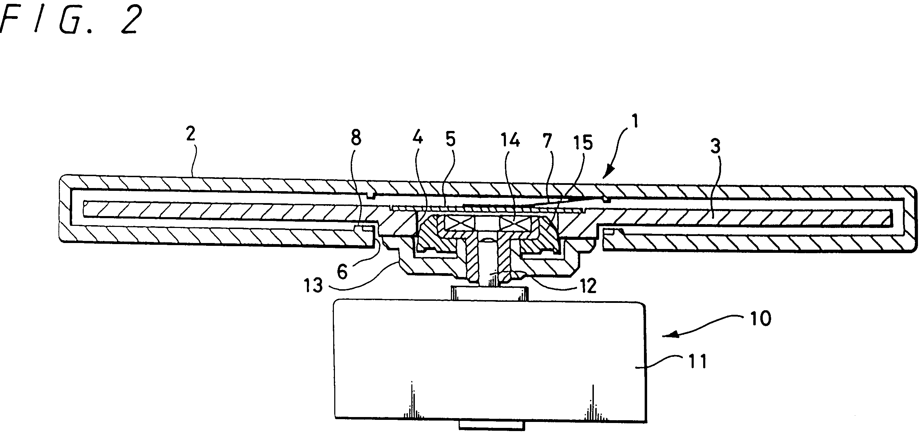

When the disc cartridge 1 is inserted in the recording and/or reproducing apparatus and set in a predetermined position, the turntable 13 of the disc drive apparatus 10 is inserted into the cartridge main body 2 through the opening 6 as shown in FIGURE 2. As a result, the disc 3 is placed on the turntable 13 of the disc drive apparatus 10 so as to be somewhat lifted from the rib 8 against the pushing force of the leaf spring 7. At this time, the magnetic plate 5 is magnetically stuck to the magnet 14 of the turntable 13, or clamped, and at the same time the centering cap 15 is engaged in the center hole 4, thus centering the optical disc 3. Under this condition, the motor 11 is operated to rotate the optical disc 3.

The above mentioned optical disc recording and/or reproducing system, however, has large abrasion and loss torque caused by the friction because the leaf spring 7 always pushes the magnetic plate 5 of the disc 3 even when the disc 3 is driven to rotate. To cope with this problem, a projection can be provided at the center of the magnetic plate 5 and made in contact with the leaf spring 7 in order to reduce the friction therebetween. However, if the projection provided on the magnetic plate 5 is eccentric to the leaf spring 7 even a little, severe abrasion may be caused between the leaf spring member 7 and the projection, and also the loss torque of the disc drive apparatus may be increased. On the other hand, the projection is provided on the leaf spring 7, the same inconvenience will be caused provided that it is relatively deviated even a little from the rotation center of the turntable 13. As a result, very severe precision is necessary in the production of the conventional disc cartridge, thus increasing the cost the more.

### SUMMARY OF THE INVENTION

It is, therefore, an object of the present invention to provide a disc cartridge which resolves the above mentioned problems.

It is another object of the present invention to provide a disc driving apparatus for using the disc cartridge.

It is still another object of the present invention to provided a disc cartridge having the anti-dust structure in which a leaf spring pushes an optical disc against a rib, thereby closing up an opening of the disc cartridge, wherein the dust and loss of torque can be suppressed when an optical disc is driven to rotate and no severe precision is necessary upon production.

According to a first embodiment of the present invention, there is provided a disc cartridge having a cartridge main body and a leaf spring. The disc cartridge main body is formed with an opening for inserting a disc rotating apparatus of a disc drive apparatus at the bottom portion and accommodates an optical disc mounted a magnetic plate at the center position. The leaf spring is provided on inner surface of the cartridge main body and pushes the central portion of the magnetic plate thereby depressing the optical disc so that the optical disc closes up the opening cartridge main body.

According to a second embodiment of the present invention, there is provided a disc drive apparatus used a disc cartridge accommodated an optical disc which has a magnetic plate at the center position. The disc drive apparatus includes a drive motor, a turntable and an axial projection. The turntable is placed on the optical disc and is mounted on a rotating shaft of the drive motor. The axial projection penetrates through an aperture of the magnetic plate and pushes the leaf spring up when the optical disc is placed on the turntable. The axial projection is provided a rotating shaft coaxially.

In the above-described invention, since the contact between the leaf spring and the magnetic plate of the optical disc is broken when the disc is driven to rotate, the magnetic plate causes no abrasion. In addition, when the disc is driven to rotate, since the axial projection provided on the turntable is projected coaxial with the rotating shaft of the drive motor, and pushes the leaf spring at the pinpoint while being rotating, the leaf spring causes no severe abrasion and the loss torque can be reduced.

### BRIEF DESCRIPTION OF THE DRAWINGS

The invention will be more readily understood with reference to the accompanying drawing, wherein:

FIGURE 1 shows a longitudinal cross-sectional view of a conventional system.

FIGURE 2 shows a longitudinal cross-sectional view of the conventional system showing the condition in which an optical disc is driven to rotate.

FIGURE 3 shows a plan view of the leaf spring provided in a disc cartridge for the conventional system.

FIGURE 4 shows a longitudinal cross-sectional view of a embodiment of the present invention.

FIGURE 5 shows a longitudinal cross-sectional view of the embodiment showing the condition in which an optical disc is driven to rotate.

FIGURE 6 shows a plan view of examples of the shape of a leaf spring provided in a disc cartridge of the embodiment.

### DESCRIPTION OF THE INVENTION

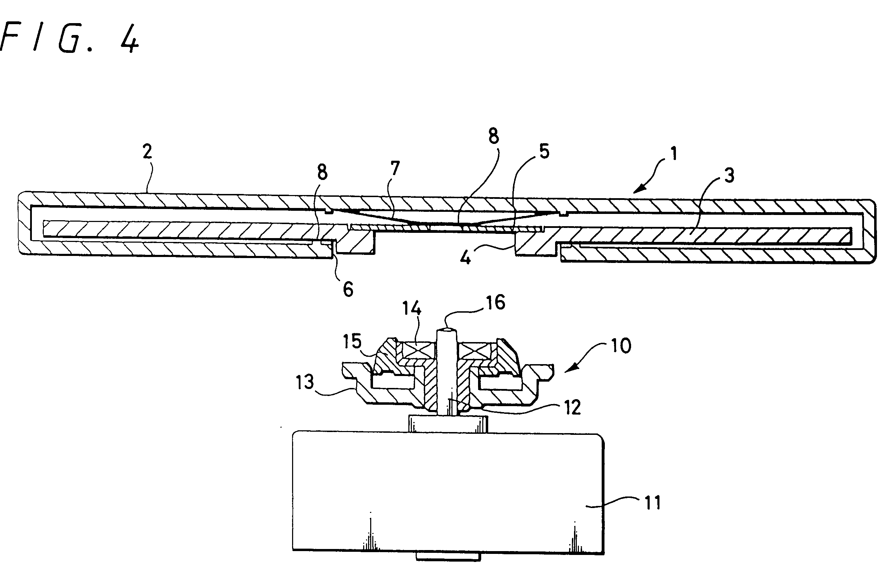

An embodiment of the invention will be described detail with reference to FIGURES 4 to 6. In FIGURES 4 to 6, like elements corresponding to those in FIGURES 1 to 3 are identified by the same numerals and will not be described.

In the disc cartridge 1 of this embodiment, the magnetic plate 5 which is mounted at the center of the optical disc 3 has an aperture 8 formed at the center. The magnetic plate 5 uses to clamp the optical disc 3 with the magnet 14 of the turntable 13. A leaf spring 70 mounted on the inner side surface of the cartridge main body 2 pushes the optical disc 3 toward the opening 6 so as to close up the aperture 8. As a result, when the disc cartridge 1 is not used or preserved, dust can be prevented from straying into the cartridge main body 2.

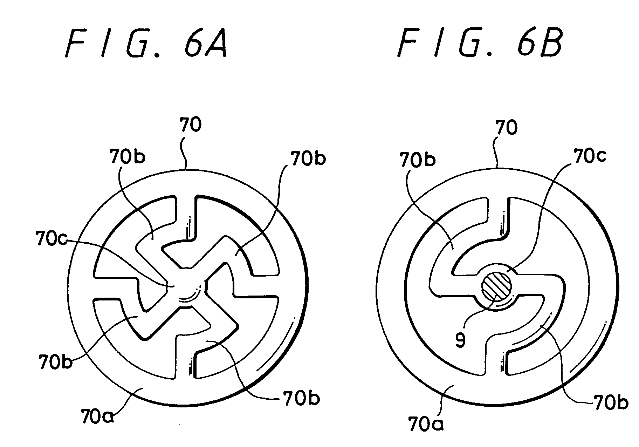

The leaf spring 70 used in the disc cartridge of the embodiment has a ring-shaped base portion 70a ,a plurality of arms 70b and a pressing portion 70c. The base portion 70a is securely attached to the inner surface of the cartridge main body 2. Each arm 70b is formed as shown in FIGURES 6A and 6B in order to assure a pushing force to the optical disc 3 at all times and has large bends formed at certain points in order to gain a length and thus to be flexible. The pressing portion 70c is formed like a plate and is connected to the base portion 70a by each of the arms 70b. The pressing portion 70c which is made in contact with the magnetic plate 5 of the optical disc 3 is formed large enough to close up the aperture 8 of the magnetic plate 5. In other words, the pressing portion 70c is formed larger than the diameter of the aperture 8. The pressing force of the leaf spring 70 to the optical disc 3 is set to value within a range from about 0.05 to 0.3 N (5 to 30 g).

The pressing portion 70c of the leaf spring 70, as shown in FIGURE 6B, is provided a lubricant material 9 such as Teflon (RTM) in order to further reduce the abrasion and loss of torque when the optical disc 3 is driven into rotation by the motor 11. The lubricant material 9 is arranged in the surface of the pressing portion 70c which is contacted to the axial projection 16 as will be described later. The lubricant material 9 may be formed to stocked to the pressing portion 70c.

The disc drive apparatus 10 for driving the optical disc 3 to rotate within the disc cartridge 1 has an axial projection 16 provided at the center of the turntable 13 so as to be coaxial with the rotating shaft 12 of the motor 11. In this embodiment, this axial projection 16 is an extension of the rotating shaft 12 of the motor 11 and the tip of the axial projection is formed to have a spherical surface.

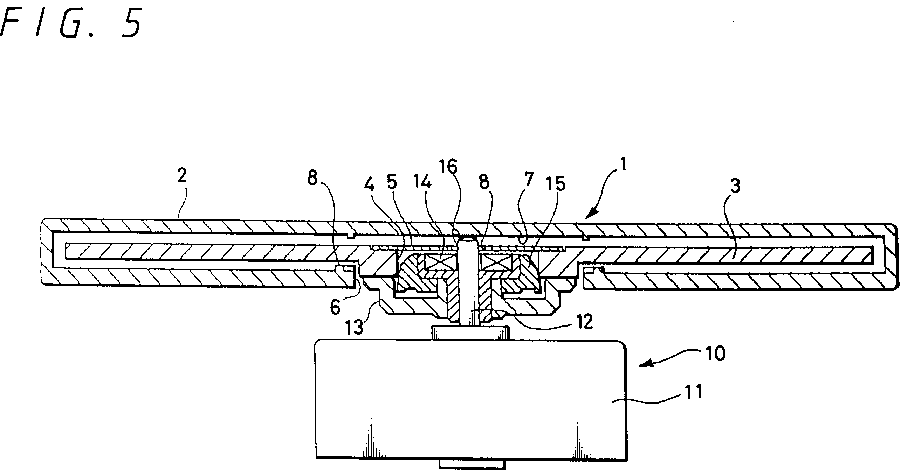

When the disc cartridge 1 is inserted in the recording and/or reproducing apparatus and set in a predetermined position, the turntable 13 of the disc drive apparatus 10 is inserted into the cartridge main body 2 through the opening 6 as shown in FIGURE 5. At this time, the magnet 15 attracts the magnetic plate 5 and the centering cap 15 is engaged in the center hole 4 of the optical disc. As a result, the optical disc 3 is centered by the centering cap 15 and is placed on the turntable 13 of the disc drive apparatus 10, and the same time the axial projection 16 penetrates through the aperture 8 of the magnetic plate 5 and pushes the pressing portion 70c of the leaf spring 70 up, and thus the leaf spring 70 is forced to break the connection with the optical disc 3. That is, the leaf spring 70 is confined to around the inner upper surface of the cartridge main body 2, under this condition the optical disc 3 is driven to rotate by the motor 11.

Thus, according to the present invention, when the optical disc 3 is driven to rotate by the motor 11, the leaf spring 70 is restricted not to come in contact with the magnetic plate 5 of the optical disc 3. As a result magnetic plate 5 causes no abrasion. In addition, when the optical disc 3 is driven to rotate, the axial projection 16 provided in the turntable 13 is rotated while pushing the leaf spring 70 at its pinpoint since it is the extension of the rotating shaft 12 of the motor 11. As a result the leaf spring 70 does not cause intense abrasion, and the loss torque can be reduced. Since the abrasion and loss torque can be suppressed by such a simple way when the optical disc 3 is driven to rotate, severe precision in the prior art is not necessary upon production of the disc cartridge, so that the cost is not increased.

Moreover, according to the present invention, under the condition that when the optical disc 3 is driven to rotate, the axial projection 16 of the turntable 13 pushes the leaf spring 70 up, the rotating shaft 12 of the motor 11 is depressed by the repulsion of this leaf spring 70, and thus the rotating shaft 12 is pressurized in the axial direction, or subjected to a thrust so as to prevent the optical disc from chattering upon rotation. Also, according to the disc cartridge of the present invention, since the magnetic plate 5 has the aperture 8 formed at the center, it is possible that upon production a plurality of discs 3 with the magnetic plates 5 mounted can be stocked in a stacked manner with the post of a tray inserted through their apertures 8, thus being easy to handle.

In addition, while in the embodiment of the present invention, the rotating shaft 12 itself of the motor 11 is extended to form the axial projection 16, the axial projection 16 may be separately provided from the rotating shaft 12 provided that it is maintained to be precisely coaxial with the rotating shaft 12 of the motor 11.

## Claims

1. A disc cartridge (1) comprising:
a cartridge main body (2) accommodating an optical disc (3) mounted at the center position and a magnetic plate (5) which has an aperture (8) formed at the center portion, said cartridge main body having an opening formed for inserting disc rotating means (10-15) at the bottom portion; and
a leaf spring member (70) provided on inner surface of said cartridge main body and pushing the central portion of the magnetic plate to thereby depress the optical disc so that the optical disc closes up said opening.

2. A disc cartridge according to claim 1, wherein said leaf spring member (70) comprises a base portion (70a), a plurality of arms (70b) and a plate portion (70c), said arms connecting said base portion and said plate portion.

3. A disc cartridge according to claim 2, wherein said arms (70b) of said spring member (70) each have large bends formed at center portion.

4. A disc cartridge according to claim 3, wherein said plate portion (70c) of said leaf spring member (70) is provided with friction reducing means (9) made of a lubricant material.

5. A disc cartridge according to claim 1, wherein said leaf spring member (70) is provided with friction reducing means (9) made of a lubricant material.

6. A disc drive apparatus for rotating an optical disc within a disc cartridge (1), the optical disc having a magnetic plate (5) mounted at the center position, the magnetic plate having an aperture (8) formed at the center position, the disc cartridge being provided a leaf spring member (70) that pushes the magnetic plate, said disc drive apparatus comprising:
a drive motor (11) having a rotating shaft (12) ;
a turntable (13) placed on the optical disc, said turntable being mounted on said rotating shaft; and
projecting means (16) for penetrating through the aperture of the magnetic plate and pushing the leaf spring member up when the optical disc is placed on said turntable, said means being provided said rotating shaft coaxially.

7. A disc drive apparatus according to claim 6, wherein said projecting means (16) is formed to project from the top surface of the turntable (13).

8. A disc drive apparatus according to claim 6, said apparatus further comprises disc centering means (15) provided on said rotating shaft (12) coaxial with said turntable (13), said projecting means being formed to project from the top portion of said disc centering means.

9. A disc drive apparatus according to claim 6, wherein the top portion of the said rotating shaft (12) is a spherical surface.

10. An optical disc recording and/or reproducing apparatus comprising:
an optical disc (3) mounted a magnetic plate (5) at the center position, said magnetic plate having an aperture (8) at the center position;
a disc cartridge (1) including a cartridge main body (2) and a leaf spring member (70), said cartridge main body accommodating said optical disc and having an opening formed at the bottom portion, said leaf spring member being provided on inner surface of said cartridge main body and pushing the central portion of said magnetic plate to thereby depress said optical disc so that said optical disc closes up said opening; and
a disc drive means (10-15) for rotating said optical disc and including a drive motor (11) which has a rotating shaft (12), a turntable (13) placed on said optical disc and mounted on said rotating shaft, and means (16) for penetrating through the aperture of said magnetic plate and pushing said leaf spring member 70) up when said optical disc is placed on said turntable, said means being provided said rotating shaft coaxially.
